# EUROPÄISCHE PATENTSCHRIFT

(11) **EP 1 117 162 B1**
(45) Veröffentlichungstag und Bekanntmachung des Hinweises auf die Patenterteilung: **22.07.2009**
(21) Anmeldenummer: 00127520.5
(22) Anmeldetag: 15.12.2000
(51) Int. Cl.: H02B 1/20

(54) **Sammelschienensystem und Verbindungsanordnung zur Verbindung der Sammelschiene mit den Anschlussflachkontakten eines elektrischen Installationsgerätes**
Busbar system and connection arrangement to connect the busbars to the terminals of an installation apparatus
Système de barres omnibus et ensemble de connexions pour connecter les barres aux bornes d'un appareil d'installation

(30) Priorität: 15.01.2000 DE 10001463
(43) Veröffentlichungstag der Anmeldung: 18.07.2001
(73) Patentinhaber: Rittal Rudolf Loh GmbH & Co. KG, 35745 Herborn (DE)
(72) Erfinder: Wagener, Hans, 35716 Dietzhölztal 2 (DE)
(74) Vertreter: Fleck, Hermann-Josef

(56) Entgegenhaltungen:
- GB-A- 2 305 006
- US-A- 5 847 321

## Beschreibung

Die Erfindung betrifft ein Sammelschienensystem mit mehreren, in einer ersten Befestigungsebene beabstandet angeordneten Stromsammelschienen mit im Wesentlichen quadratischem Querschnitt und mit in allen Außenseiten eingebrachten, T-förmigen Verbindungsnuten zum Anschluss von elektrischen Installationsgeräten mit in einer zur ersten Verbindungsebene senkrecht ausgerichteten zweiten Verbindungsebene angeordneten Anschlussflachkontakten.

Ein derartiges Stromsammelschienensystem ist in der US-A 5,847,321 angegeben. Bei diesem bekannten Sammelschienensystem, bei dem die Sammelschienen gegenüber einer Ebene versetzt sind, sind Installationsgeräte über Anschlussflachkontakte in einer zur zugekehrten Ebene der Sammelschienen senkrechten Verbindungsebene über weitere Systemelemente angeordnet.

Stromsammelschienen und elektrische Installationsgeräte werden vorzugsweise für hohe Stromstärken verwendet und sind an den stromleitenden Bereichen mit entsprechend großen Querschnitten ausgelegt. Werden die Stromsammelschienen z. B. in einer horizontalen Verbindungsebene eines Schaltschrankes angeordnet und ist das anzuschließende Installationsgerät mit den in einer Ebene liegenden Anschlussflachkontakten in einer vertikalen Verbindungsebene in dem Schaltschrank einzubauen, dann müssen zwischen den Stromsammelschienen und den Anschlussflachkontakten speziell abgewinkelte und/oder abgebogene Verbindungskontakte verwendet werden, da die Verbindungsstellen für die einzelnen Stromsammelschienen und den dazu gehörigen Anschlussflachkontakten räumlich jeweils unterschiedlich zueinander angeordnet sind. Die Verbindungskontakte können daher oft erst dann hergestellt werden, wenn der Einbauort des Installationsgerätes feststeht. Dies ist aber mit erheblichen Schwierigkeiten am Einsatzort des Schaltschrankes verbunden, insbesondere dann, wenn die Verbindungskontakte als Flachschienen für hohe Stromstärke auszubilden sind.

Es ist Aufgabe der Erfindung, ein Sammelschienensystem der eingangs erwähnten Art zu schaffen, bei dem mit vorgefertigten Teilen auf einfache Weise bei guter Kontaktgabe eine Verbindung zwischen den Stromsammelschienen und den Anschlussflachkontakten eines Installationsgerätes herzustellen, auch wenn diese in zwei senkrecht zueinander stehenden Verbindungsebenen angeordnet sind.

Diese Aufgabe wird nach der Erfindung dadurch gelöst, dass auf der dem Installationsgerät zugekehrten Seite der Stromsammelschienen im Abstand der Anschlussflachkontakte des Installationsgerätes Isolationsbügel bzw. Isolationschassis befestigbar sind, die sich senkrecht zur Längsrichtung der Stromsammelschienen erstrecken und im Bereich jeder Stromsammelschiene mit einer Aussparung versehbar oder versehen sind, dass in jedes Isolationschassis nur im Bereich einer zugeordneten Stromsammelschiene in die Aussparung ein Kontaktstück einsetzbar oder eingesetzt ist, das mit der zugeordneten Stromsammelschiene verbindbar oder verbunden ist, dass das Isolationschassis einen Verbindungsschenkel von Verbindungswinkeln aufnehmen, die zusammen mit dem zugeordneten Kontaktstück mit der zugeordneten Stromsammelschiene verbindbar oder verbunden ist, dass die Verbindungskontakte mit einem aus dem Isolationschassis herausragenden Anschlussschenkel in der senkrecht zu der ersten Befestigungsebene stehenden zweiten Befestigungsebene Anschlussstellen für die Anschlussflachkontakte des Installationsgerätes bilden und dass die Kontaktstücke bügelartig ausgebildet sind und mit ihren Seitenschenkeln eine Aufnahme für die Stromsammelschiene bilden.

Mit dem Isolationschassis, den Kontaktstücken und den Verbindungswinkeln lassen sich Anschlussstellen zu den einzelnen Stromsammelschienen herstellen, die mit ihrer Ebene schon auf die Verbindungsebene der Anschlussflachkontakte des Installationsgerätes ausgerichtet ist, z. B. parallel zu dieser verläuft. Das Isolationschassis, die Kontaktstücke und die Verbindungsbügel können vorgefertigt und für bestimmte maximale Stromstärken als Bausätze angeboten werden.

Die Befestigung der Kontaktstücke, der Verbindungswinkel mit den Isolationsbügeln an den Stromsammelschienen ist nach einer Ausgestaltung so gelöst, dass die Verbindungsnuten der Stromsammelschienen Schiebemuttern mit Gewindeaufnahmen aufnehmen, in die Verbindungsschrauben einschraubbar sind, die durch Befestigungsbohrungen der Verbindungswinkel und der Kontaktstücke einführbar oder eingeführt sind.

Das Isolationschassis bildet dabei mit seinen Seitenschenkeln eine Aufnahme für die Verbindungsschenkel der Verbindungswinkel, die sich quer zu der Längsrichtung der Stromsammelschienen erstreckt.

Damit einheitliche Verbindungswinkel verwendbar sind, sieht eine weitere Ausgestaltung vor, dass die Verbindungsschenkel der Verbindungswinkel mit einer Reihe von Befestigungsbohrungen versehen sind, von denen im Bereich der den Stromsammelschienen zugeordneten Aussparungen jeweils mindestens eine Befestigungsbohrung angeordnet ist. Die räumliche Ausrichtung der Isolationsbügel und der von diesen aufgenommenen Verbindungswinkel in der ersten Verbindungsebene der Stromsammelschienen bleibt daher gleich, es ist jedoch sichergestellt, dass die Verbindungen zu den zugeordneten Stromsammelschienen individuell hergestellt werden können, indem die entsprechenden Aussparungen der Isolationsbügel mit Kontaktstücken belegt werden.

Der Anschluss des Installationsgerätes wird dadurch vereinfacht, dass die Endbereiche der Anschlussschenkel der Verbindungswinkel mit Anschlussbohrungen versehen sind, die auf die Befestigungsbohrungen in den Anschlussflachkontakten des Installationsgerätes angepasst sind.

Ist nach einer Weiterbildung vorgesehen, dass die Aussparungen der Isolationsbügel mittels ausbrechbarer Teilbereiche in dem Isolationschassis nach Bedarf herstellbar sind, dann kann nur an der gewünschten Stelle die Aussparung für das Kontaktstück geschaffen werden. Der Zugang zu den nicht anzuschließenden Stromsammelschienen ist dann verhindert und die Isolation zu dem nicht betroffenen Verbindungswinkel verbessert.

Eine weitere Anpassungsmöglichkeit für die beiden Verbindungsebenen wird dadurch geschaffen, dass die Anschlussschenkel der Verbindungswinkel mittels Flachschienen verlängerbar sind, um den Abstand der Anschlussstellen für das Installationsgerät senkrecht zur ersten Verbindungsebene der Stromsammelschienen zu vergrößern, sowie dadurch, dass die Flachschienen über Z-förmige Übergangsstücke mit den Anschlussflachkontakten des Installationsgerätes verbindbar oder verbunden sind.

Ist nach einer Ausgestaltung vorgesehen, dass die Verbindungswinkel aus mehreren Einzel-Verbindungswinkel zusammengesetzt sind, deren Verbindungsschenkel aufeinander liegen und deren Anschlussschenkel zueinander beabstandet sind, wobei der Abstand der Anschlussschenkel auf die Dicke der Anschlussflachkontakte des Installationsgerätes angepasst ist, und dass nicht belegte Abstände mittels Abstandskontaktstücken ausgefüllt sind, sowie dass die Flachschienen und die Übergangsstücke aus mehreren, beabstandeten Einzel-Flachschienen und Einzel-Übergangsstücken zusammengesetzt sind, wobei deren Abstände auf die Dicke der Anschlussschenkel der Verbindungsbügel und der Anschlussflachkontakte des Installationsgerätes angepasst sind, dann können diese Einzelelemente für mehr oder weniger große maximale Stromstärken verwendet werden, wenn mehr der weniger dieser Einzelelemente zu einem Verbindungswinkel, einer Flachschiene und einem Z-förmigen Übergangsstück zusammengesetzt werden.

Die Einzelelemente können mittels spezieller Abstandselemente auf Abstand gehalten werden.

Die Erfindung wird anhand von in den Zeichnungen dargestellten Ausführungsbeispielen näher erläutert. Es zeigen:
- Fig. 1: in Explosionsdarstellung ein Sammelschienensystem mit drei Stromsammelschienen in einer horizontalen Verbindungsebene und einem elektrischen Installationsgerät, deren Anschlussflachkontakte in einer vertikalen Verbindungsebene angeordnet sind,
- Fig. 2: einen Abschnitt einer Stromsammelschiene mit einer in eine Verbindungsnut einführbaren Schiebemutter,
- Fig. 3: ein der Fig. 1 entsprechendes Sammelschienensystem, bei dem mittels Flachschienen und Z-förmigen Übergangsstücken die vertikale Verbindungsebene für die Anschlussflachkontakte des Installationsgerätes senkrecht und parallel zur horizontalen Verbindungsebene der Stromsammelschiene versetzbar ist, und
- Fig. 4: ein Sammelschienensystem, bei dem an die Verbindungswinkel anders ausgebildete Verbindungsschienen anbringbar sind, auf die Installationsgeräte mit Federkontakten aufsteckbar sind.

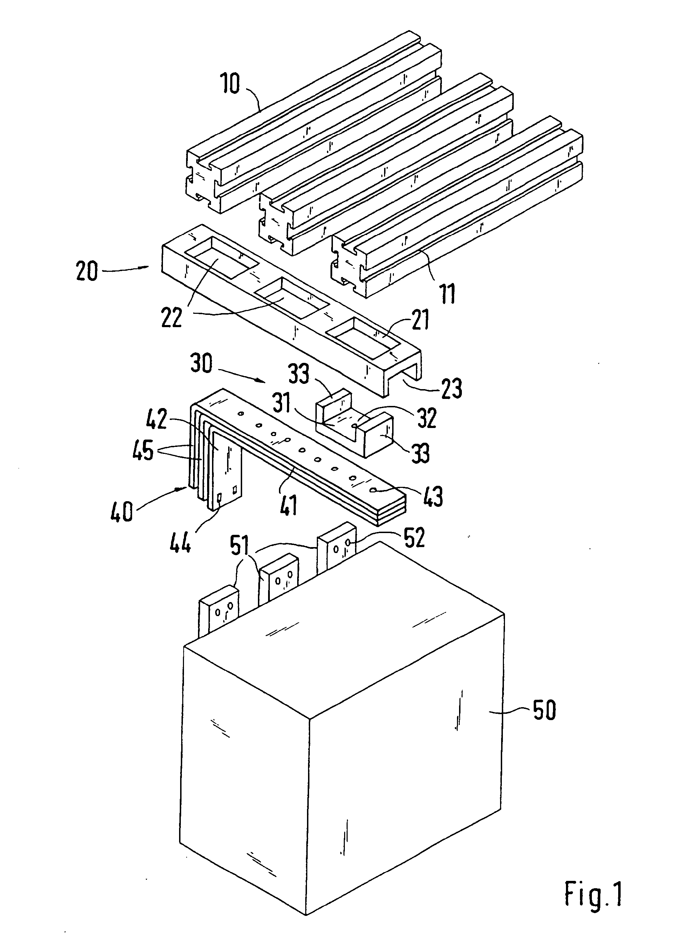

Wie Fig. 1 zeigt, sind in einer horizontalen Verbindungsebene drei Stromsammelschienen 10 in vorgegebenem Abstand angeordnet, wobei ein nicht dargestellter Halter diese Stromsammelschienen in einer Befestigungsebene im Schaltschrank festlegt. Der quadratische Querschnitt und der Abstand der Stromsammelschienen 10 richtet sich nach der maximalen Stromstärke. Soll ein elektrisches Installationsgerät 50 mit Anschlussflachkontakten 51 mit diesen Stromsammelschienen 10 verbunden werden, dann müssen die Verbindungsteile eine Umsetzung in die vertikale Verbindungsebene der Anschlusskontakte 51 des Installationsgerätes 50, das z.B. als Drehstrom-Leistungsschalter ausgebildet sein kann, vornehmen. Anhand der Fig. 1 wird die Verbindung einer Phase erläutert.

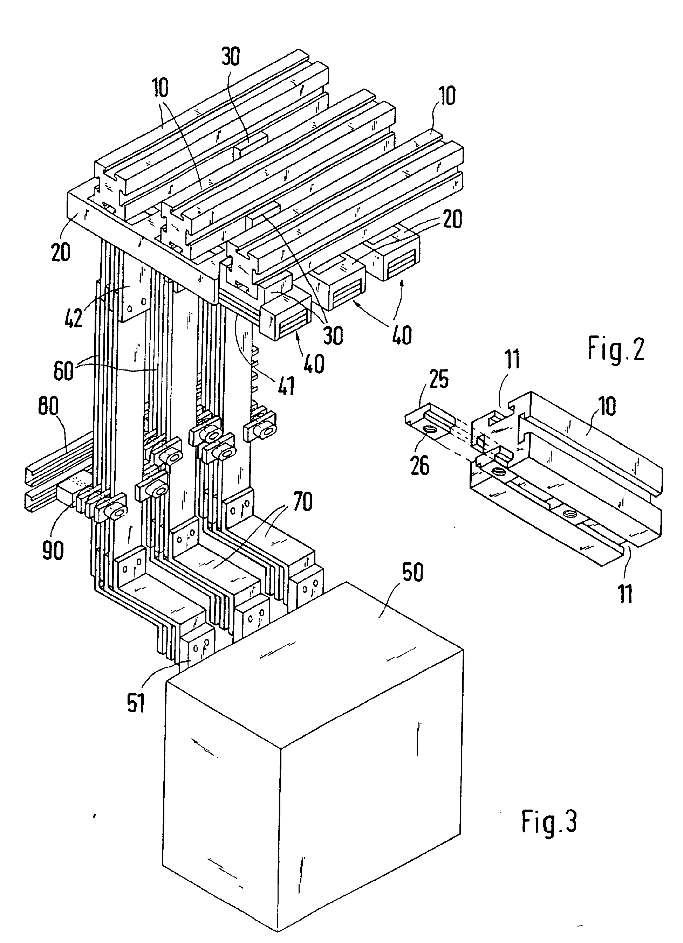

An der Unterseite der Stromsammelschienen 10 wird ein Isolationsbügel oder Isolationschassis 20 pro Phase angebracht, der z.B. als Kunststoff-Spritzgußteil ausgebildet sein kann. Dieses Isolationschassis 20 erstreckt sich quer zu den Stromsammelschienen 10 und trägt im Bereich jeder Stromsammelschiene 10 ausbrechbare Teilbereiche 22 zur Bildung einer Aussparung 21, wie die Bezugszeichen 22 und 21 deutlich machen. Es besteht dabei in jedem Isolationschassis 20 nur eine Aussparung 21 zu einer zugeordneten Stromsammelschiene 10. Die drei Isolationschassis 20 sind in Längsrichtung der Stromsammelschienen 10 im Abstand zueinander angeordnet, der dem Abstand der Anschlussflachkontakte 51 am Installationsgerät 50 entspricht, wie der Fig. 3 zu entnehmen ist. In die Aussparung 21 des Isolationschassis 20 wird ein bügelartiges Kontaktstück 30 eingebracht, das mit dem Seitenschenkel 33 eine Aufnahme für die zugeordnete Stromsammelschiene 10 bildet. Im Grundschenkel 31 des Kontaktstückes 30 ist eine Befestigungsbohrung 32 eingebracht. Das Isolationschassis 20 bildet zum Installationsgerät 50 hin eine Aufnahme 23, die einen Verbindungsschenkel 41 eines Verbindungswinkels 40 aufnimmt. Dieser Verbindungswinkel 40 erstreckt sich über alle Stromsammelschienen 10 wie das Isolationschassis 20. Der Verbindungsschenkel 41 trägt eine Reihe von Befestigungsbohrungen 43, von denen jeweils mindestens eine in die mit 21 und 22 bezeichneten Teile des Isolationschassis 20 treffen, damit jeder Verbindungswinkel 40 wahlweise mit jeder der Stromsammelschienen 10 verbindbar ist. Die Verbindungswinkel 40 für alle Phasen sind daher gleich ausgebildet und ragen mit Anschlussschenkeln 42 aus dem Isolationschassis 20. Dabei sind, wie der Fig. 3 zu entnehmen ist, die Anschlussschenkel 42 bereits in einer vertikalen Verbindungsebene ausgerichtet, so dass die Anschlussflachkontakte 51 des Installationsgerätes 50 direkt mit diesen verbunden werden können. Die Verbindung erfolgt über die Anschlussbohrungen 44 der Anschlussschenkel 42, die auf die Befestigungsbohrungen 52 der Anschlussflachkontakte 51 des Installationsgerätes 50 angepasst sind.

In die Verbindungsnut 11 der Stromsammelschienen 10 werden T-förmige Schiebemuttern 25 mit Gewindeaufnahme 26 eingeschoben, in die Verbindungsschrauben einschraubbar sind. Diese Verbindungsschrauben werden durch Befestigungsbohrungen 43 des Verbindungsschenkels 41 des Verbindungswinkels 40 und die Befestigungsbohrung 32 in dem Kontaktstück 30 eingeführt, so dass sie den Verbindungswinkel 40 mit dem Isolationsbügel 20 und dem eingelegten Kontaktstück 30 mit der zugeordneten Stromsammelschiene 10 verbinden.

Auf diese Weise entsteht ein Verbindungsschema mit allen drei Stromsammelschienen 10. Dabei bleibt noch zu erwähnen, dass die Verbindungswinkel 40 massiv aus Flachmaterial gebogen oder aus mehreren Einzel-Verbindungswinkeln zusammengesetzt sein können. Die Verbindungsschenkel 41 liegen satt aufeinander, während die Anschlussschenkel 42 einen Abstand 45 zueinander einnehmen können, wie die Fig. 1 und 3 zeigen.

Die Verbindungsebene für die Anschlussflachkontakte 51 des Installationsgerätes 50 kann senkrecht und parallel zu der Verbindungsebene der Stromsammelschienen 10 versetzt werden, wie Fig. 3 zeigt. Dabei können massive oder aus Einzelelementen zusammengesetzte Flachschienen 60 verwendet werden, die die Abstände 45 der Verbindungswinkel 40 belegen und den parallelen Versatz der Verbindungsebene festlegen. Der senkrechte Versatz wird durch Z-förmige Übergangsstücke 70 festgelegt. Dabei können massive oder aus Einzelelementen zusammengesetzte Übergangsstücke 70 verwendet werden, die ineinander verschachtelte Verbindungen bilden. Nicht belegte Abstände zwischen den Einzelelementen können im Bereich der Verbindungsstellen, z.B. Verschraubungen, durch Füllkontaktstücke ausgefüllt werden.

Wie in Fig. 3 gezeigt ist, können die Einzel-Flachschienen der Abstandselemente 90 auf Abstand gehalten werden, die über eine Halteschiene 80 oder dgl. zusätzlich im Schaltschrank befestigt werden können. Dasselbe gilt auch für die Z-förmigen Übergangsstücke 70. Sind die Verbindungswinkel 40, die Flachschienen 60 und die Übergangsstücke 70 aus Einzelelementen zusammengesetzt, dann kann mit der Anzahl der Einzelelemente die maximale Stromstärke, die über die Verbindungen zu übertragen ist, verändert und angepasst werden.

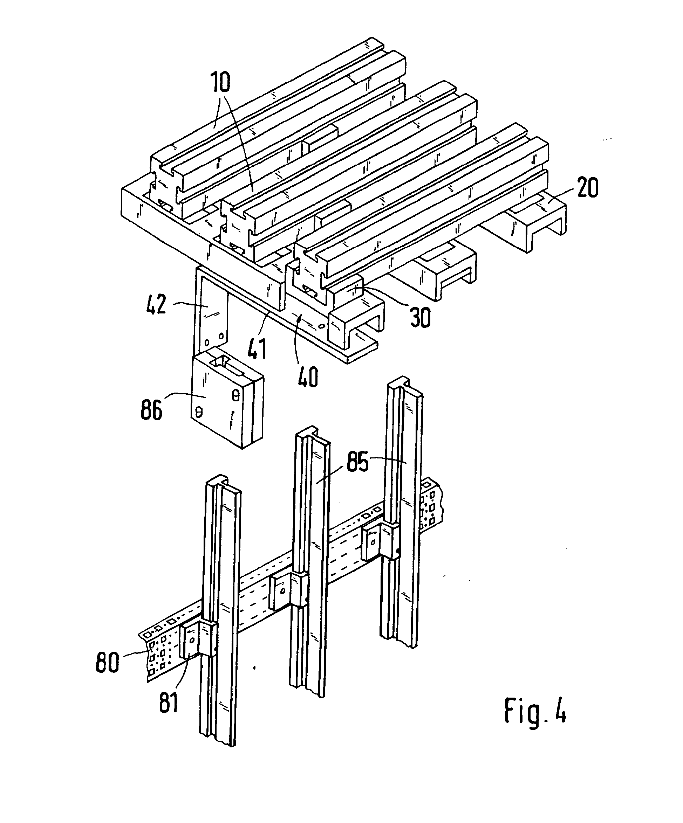

Wie Fig. 4 zeigt, können die Verbindungen auch an anders gestaltete Anschlusskontakte des Installationsgerätes angepasst werden. Weist das Installationsgerät aufsteckbare, U-förmige Steckkontakte als Anschlüsse auf, dann können T-förmige Anschlussschienen 85 verwendet werden, die über Adapter 86 leitend mit den Anschlusschenkeln 42 der Verbindungswinkel 40 verbindbar sind. Über Halteelemente 81 können diese Anschlussschienen 85 auf einer Halteschiene 80 befestigt werden.

## Patentansprüche

1. Sammelschienensystem mit mehreren, in einer ersten Befestigungsebene beabstandet angeordneten Stromsammelschienen (10) mit im Wesentlichen quadratischem Querschnitt und mit in allen Außenseiten eingebrachten, T-förmigen Verbindungsnuten zum Anschluss von elektrischen Installationsgeräten (50) mit in einer zur ersten Verbindungsebene senkrecht ausgerichteten zweiten Verbindungsebene angeordneten Anschlussflachkontakten (51),
wobei auf der dem Installationsgerät (50) zugekehrten Seite der Stromsammelschienen (10) im Abstand der Anschlussflachkontakte (51) des Installationsgerätes (50) Isolationschassis (20) befestigt sind, die sich senkrecht zur Längsrichtung der Stromsammelschienen (10) erstrecken und im Bereich jeder Stromsammelschiene (10) mit einer Aussparung (21) versehen sind,
wobei in jedes Isolationschassis (20) nur im Bereich einer zugeordneten Stromsammelschiene (10) in die Aussparung (21) ein Kontaktstück (30) eingesetzt ist, das mit der zugeordneten Stromsammelschiene (10) verbunden ist,
wobei die Isolationschassis (20) einen Verbindungsschenkel (41) von Verbindungswinkeln (40) aufnehmen, die zusammen mit dem zugeordneten Kontaktstück (30) mit der zugeordneten Stromsammelschiene (10) verbunden sind,
wobei die Verbindungskontakte (40) mit einem aus dem Isolationschassis (20) herausragenden Anschlussschenkel (42) in der senkrecht zu der ersten Befestigungsebene stehenden zweiten Befestigungsebene Anschlussstellen für die Anschlussflachkontakte (51) des Installationsgerätes (50) bilden und
wobei die Kontaktstücke (30) bügelartig ausgebildet sind und mit ihren Seitenschenkeln (33) eine Aufnahme für die Stromsammelschiene (10) bilden.

2. Sammelschienensystem nach Anspruch 1,
**dadurch gekennzeichnet,**
**dass** die Verbindungsnuten (11) der Stromsammelschienen (10) Schiebemuttern (25) mit Gewindeaufnahmen (26) aufnehmen, in die Verbindungsschrauben einschraubbar sind, die durch Befestigungsbohrungen (43, 32) der Verbindungswinkel (40) und der Kontaktstücke (30) einführbar oder eingeführt sind.

3. Sammelschienensystem nach Anspruch 1 oder 2,
**dadurch gekennzeichnet,**
**dass** das Isolationschassis (20) mit seinen Seitenschenkeln dem Installationsgerät (50) zugekehrt eine Aufnahme (23) für den Verbindungsschenkel (41) des Verbindungswinkels (40) bilden.

4. Sammelschienensystem nach einem der Ansprüche 1 bis 3,
**dadurch gekennzeichnet,**
**dass** die Verbindungsschenkel (41) der Verbindungswinkel (40) mit einer Reihe von Befestigungsbohrungen (43) versehen sind, von denen im Bereich der den Stromsammelschienen (10) zugeordneten Aussparungen (21) jeweils mindestens eine Befestigungsbohrung (43) angeordnet ist.

5. Sammelschienensystem nach einem der Ansprüche 1 bis 4,
**dadurch gekennzeichnet,**
**dass** die Endbereiche der Anschlussschenkel (42) der Verbindungswinkel (40) mit Anschlussbohrungen (44) versehen sind, die auf die Befestigungsbohrungen (52) in den Anschlussflachkontakten (51) des Installationsgerätes (50) angepasst sind.

6. Sammelschienensystem nach einem der Ansprüche 1 bis 5,
**dadurch gekennzeichnet,**
**dass** die Aussparungen (21) des Isolationschassis (20) mittels ausbrechbarer Teilbereiche (22) in dem Isolationschassis (20) nach Bedarf herstellbar sind.

7. Sammelschienensystem nach einem der Ansprüche 1 bis 6,
**dadurch gekennzeichnet,**
**dass** die Anschlussschenkel (42) der Verbindungswinkel (40) mittels Flachschienen (60) verlängerbar sind, um den Abstand der Anschlussstellen für das Installationsgerät (50) senkrecht zur ersten Verbindungsebene der Stromsammelschienen (10) zu vergrößern.

8. Sammelschienensystem nach Anspruch 7,
**dadurch gekennzeichnet,**
**dass** die Flachschienen (60) über Z-förmige Übergangsstücke (70) mit den Anschlussflachkontakten (51) des Installationsgerätes (50) verbindbar oder verbunden sind.

9. Sammelschienensystem nach einem der Ansprüche 1 bis 8,
**dadurch gekennzeichnet,**
**dass** die Verbindungswinkel (40) aus mehreren Einzel-Verbindungswinkeln zusammengesetzt sind, deren Verbindungsschenkel (41) aufeinander liegen und deren Anschlussschenkel (42) zueinander beabstandet sind, wobei der Abstand (45) der Anschlussschenkel (42) auf die Dicke der Anschlussflachkontakte (51) des Installationsgerätes (50) angepasst ist, und dass nicht belegte Abstände (45) mittels Abstandskontaktstücken ausgefüllt sind.

10. Sammelschienensystem nach Anspruch 7 und 8,
**dadurch gekennzeichnet,**
**dass** die Flachschienen (60) und die Übergangsstücke (70) aus mehreren, beabstandeten Einzel-Flachschienen und Einzel-Übergangsstücken zusammengesetzt sind, wobei deren Abstände auf die Dicke der Anschlussschenkel (42) der Verbindungsbügel (40) und der Anschlussflachkontakte (51) des Installationsgerätes (50) angepasst ist.

11. Sammelschienensystem nach einem der Ansprüche 7 bis 10,
**dadurch gekennzeichnet,**
**dass** die Einzel-Flachschienen und die Einzel-Übergangsstücke mittels Abstandshalter (90) auf Abstand gehalten sind.

## Claims

1. Busbar system having a plurality of busbars (10) which are arranged at a distance from one another in a first mounting plane and have a substantially square cross section and have T-shaped connecting grooves, which are made in all outer sides, for connecting electrical installation devices (50) with flat connection contacts (51) which are arranged in a second connecting plane which is oriented perpendicular to the first connecting plane,
with insulation chassis (20) which extend perpendicular to the longitudinal direction of the busbars (10) and are provided with a cutout (21) in the region of each busbar (10) being mounted on that side of the busbars (10) which faces the installation device (50) at a distance from the flat connection contacts (51) of the installation device (50),
with a contact piece (30) which is connected to the associated busbar (10) being inserted into the cutout (21) only in the region of an associated busbar (10) in each insulation chassis (20),
with the insulation chassis (20) holding a connecting limb (41) of connecting brackets (40) which are connected to the associated busbar (10) together with the associated contact piece (30),
with the connecting contacts (40) forming connection points for the flat connection contacts (51) of the installation device (50) with a connection limb (42) which protrudes from the insulation chassis (20) in the second mounting plane which is perpendicular to the first mounting plane, and
with the contact pieces (30) being of clip-like design and by way of their side limbs (33) forming a holder for the busbar (10).

2. Busbar system according to Claim 1,
**characterized**
**in that** the connecting grooves (11) of the busbars (10) hold cage nuts (25) with threaded holders (26) into which connecting screws can be screwed, it being possible to insert said connecting screws or said connecting screws being inserted through mounting holes (43, 32) in the connecting brackets (40) and the contact pieces (30).

3. Busbar system according to Claim 1 or 2,
**characterized**
**in that** the insulation chassis (20), with its side limbs facing the installation device (50), forms a holder (23) for the connecting limb (41) of the connecting bracket (40).

4. Busbar system according to one of Claims 1 to 3,
**characterized**
**in that** the connecting limbs (41) of the connecting brackets (40) are provided with a series of mounting holes (43), of which in each case at least one mounting hole (43) is arranged in the region of the cutouts (21) which are associated with the busbars (10).

5. Busbar system according to one of Claims 1 to 4,
**characterized**
**in that** the end regions of the connection limbs (42) of the connecting brackets (40) are provided with connection holes (44) which are matched to the mounting holes (52) in the flat connection contacts (51) of the installation device (50).

6. Busbar system according to one of Claims 1 to 5,
**characterized**
**in that** the cutouts (21) in the insulation chassis (20) can be produced by means of subregions (22), which can be broken out, in the insulation chassis (20) as required.

7. Busbar system according to one of Claims 1 to 6,
**characterized**
**in that** the connection limbs (42) of the connecting brackets (40) can be extended by means of flat rails (60) in order to increase the distance of the connection points for the installation device (50) perpendicular to the first connecting plane of the busbars (10).

8. Busbar system according to Claim 7,
**characterized**
**in that** the flat rails (60) can be or are connected to the flat connection contacts (51) of the installation device (50) by means of Z-shaped transition pieces (70).

9. Busbar system according to one of Claims 1 to 8,
**characterized**
**in that** the connecting brackets (40) are composed of a plurality of individual connecting brackets, of which the connecting limbs (41) lie one on the other and of which the connection limbs (42) are at a distance from one another, with the distance (45) of the connection limbs (42) being matched to the thickness of the flat connection contacts (51) of the installation device (50), and
**in that** unoccupied distances (45) are filled by means of spacer contact pieces.

10. Busbar system according to Claims 7 and 8,
**characterized**
**in that** the flat rails (60) and the transition pieces (70) are composed of a plurality of spaced-apart individual flat rails and individual transition pieces, with the distances thereof being matched to the thickness of the connection limbs (42) of the connecting brackets (40) and the flat connection contacts (51) of the installation device (50).

11. Busbar system according to one of Claims 7 to 10,
**characterized**
**in that** the individual flat rails and the individual transition pieces are held at a distance by means of spacers (90).

## Revendications

1. Système de barres omnibus avec plusieurs barres omnibus électriques (10) de section transversale essentiellement carrée disposées à distance l'une de l'autre dans un premier plan de fixation et avec des rainures d'assemblage en forme de T pratiquées dans toutes les faces extérieures, pour le raccordement d'appareils électriques d'installation (50) avec des bornes (51) disposées dans un deuxième plan de fixation orienté perpendiculairement au premier plan de fixation,
dans lequel, sur le côté des barres omnibus électriques (10) tourné vers l'appareil d'installation (50) et à distance des bornes (51) de l'appareil d'installation (50), sont fixés des châssis d'isolation (20) qui s'étendent perpendiculairement à la direction longitudinale des barres omnibus électriques (10) et qui sont pourvus d'un évidement (21) dans la région de chaque barre omnibus électrique (10),
dans lequel, dans chaque châssis d'isolation (20) uniquement dans la région de chaque barre omnibus électrique (10), une pièce de contact (30) qui est reliée à la barre omnibus électrique associée (10) est introduite dans l'évidement (21),
dans lequel les châssis d'isolation (20) reçoivent une branche d'assemblage (41) d'équerres d'assemblage (40), qui sont assemblées à la barre omnibus électrique associée (10) en même temps que la pièce de contact associée (30),
dans lequel les contacts d'assemblage (40) forment avec une branche d'assemblage (42) sortant du châssis d'isolation (20), dans le deuxième plan de fixation perpendiculaire au premier plan de fixation, des points de raccordement pour les bornes (51) de l'appareil d'installation (50), et
dans lequel les pièces de contact (30) sont réalisées en forme d'étrier et forment avec leurs branches latérales (33) un logement pour la barre omnibus électrique (10).

2. Système de barres omnibus selon la revendication 1, **caractérisé en ce que** les rainures d'assemblage (11) des barres omnibus électriques (10) comprennent des écrous mobiles (25) avec des logements filetés (26), dans lesquels on peut visser des vis d'assemblage qui peuvent être ou sont introduites à travers des alésages de fixation (43, 32) des équerres d'assemblage (40) et des pièces de contact (30).

3. Système de barres omnibus selon la revendication 1 ou 2, **caractérisé en ce que** le châssis d'isolation (20) forme avec ses branches latérales tournées vers l'appareil d'installation (50) un logement (23) pour la branche d'assemblage (41) de l'équerre d'assemblage (40).

4. Système de barres omnibus selon l'une quelconque des revendications 1 à 3, **caractérisé en ce que** les branches d'assemblage (41) des équerres d'assemblage (40) sont pourvues d'une série d'alésages de fixation (43), dont chaque fois au moins un alésage de fixation (43) est disposé dans la région des évidements (21) associés aux barres omnibus électriques (10).

5. Système de barres omnibus selon l'une quelconque des revendications 1 à 4, **caractérisé en ce que** les régions d'extrémité des branches de raccordement (42) des équerres d'assemblage (40) sont pourvues d'alésages de raccordement (44), qui sont adaptés aux alésages de fixation (52) dans les bornes (51) de l'appareil d'installation (50).

6. Système de barres omnibus selon l'une quelconque des revendications 1 à 5, **caractérisé en ce que** les évidements (21) du châssis d'isolation (20) peuvent être réalisés au besoin au moyen de parties cassables (22) dans le châssis d'isolation (20).

7. Système de barres omnibus selon l'une quelconque des revendications 1 à 6, **caractérisé en ce que** les branches de raccordement (42) des équerres d'assemblage (40) peuvent être prolongées par des barres plates (60), destinées à augmenter la distance entre les points de raccordement pour l'appareil d'installation (50) perpendiculairement au premier plan d'assemblage des barres omnibus électriques (10).

8. Système de barres omnibus selon la revendication 7, **caractérisé en ce que** les barres plates (60) peuvent être ou sont assemblées aux bornes (51) de l'appareil d'installation (50) au moyen de pièces de transition (70) en forme de Z.

9. Système de barres omnibus selon l'une quelconque des revendications 1 à 8, **caractérisé en ce que** les équerres d'assemblage (40) sont composées de plusieurs équerres d'assemblage individuelles, dont les branches d'assemblage (41) sont superposées et dont les branches de raccordement (42) sont espacées l'une de l'autre, dans lequel la distance (45) entre les branches de raccordement (42) est adaptée à l'épaisseur des bornes (51) de l'appareil d'installation (50), et **en ce que** les distances (45) non occupées sont remplies de pièces de contact d'écartement.

10. Système de barres omnibus selon la revendication 7 et 8, **caractérisé en ce que** les barres plates (60) et les pièces de transition (70) sont composées de plusieurs barres plates individuelles et de plusieurs pièces de transition individuelles espacées, dans lequel leurs distances sont adaptées à l'épaisseur des branches de raccordement (42) des étriers d'assemblage (40) et des bornes (51) de l'appareil d'installation (50).

11. Système de barres omnibus selon l'une quelconque des revendications 7 à 10, **caractérisé en ce que** les barres plates individuelles et les pièces de transition individuelles sont maintenues à distance au moyen de pièces d'écartement (90).
